(19) Europäisches Patentamt
European Patent Office
Office européen des brevets

(11) EP 0 814 487 A1

(12) **DEMANDE DE BREVET EUROPEEN**

(43) Date de publication:
**29.12.1997 Bulletin 1997/52**

(51) Int Cl.⁶: **H01G 4/22**

(21) Numéro de dépôt: **97401343.5**

(22) Date de dépôt: **13.06.1997**

(84) Etats contractants désignés:
**AT BE CH DE DK ES FI FR GB GR IE IT LI LU MC NL PT SE**

(30) Priorité: **19.06.1996 FR 9607631**

(71) Demandeur: **ELF ATOCHEM S.A.**
**92800 Puteaux (FR)**

(72) Inventeurs:
- **Berger, Noelle**
  **69130 Ecully (FR)**
- **Jay, Pierre**
  **69370 Saint Didier Aux Monts D'Or (FR)**

(54) **Imprégnants pour condensateurs auto-régénérateurs**

(57) La présente invention concerne l'utilisation de fluides isolants choisis dans le groupe constitué par des esters aliphatiques, des alkylbenzènes, des compositions réticulables comprenant au moins un polyol polydiénique, au moins un polyisocyanate et au moins une charge liquide chimiquement inerte, pour l'imprégnation de bobinages de condensateurs auto-régénérateurs.

EP 0 814 487 A1

## Description

La présente invention concerne le domaine des condensateurs électriques. Plus précisément, elle concerne l'utilisation de certains fluides isolants pour l'imprégnation de bobinages de condensateurs auto-régénérateurs à armatures métallisées.

Par condensateurs auto-régénérateurs, on désigne présentement des condensateurs comportant au moins une armature constituée d'une très fine couche de métal de quelques centaines d'angströms d'épaisseur dont la propriété principale est que ladite armature se volatilise lors du claquage du condensateur à l'endroit ou se produit ledit claquage. Cette armature peut être soit une fine couche de métal comme l'aluminium ou le zinc ou un alliage de ces deux métaux, déposée directement sur un film polymère tel que polypropylène ou polyester qui constitue le diélectrique solide, soit déposée sur les deux faces d'un papier, cette armature étant alors associée à un ou plusieurs films de polymère qui joue le rôle de diélectrique. Dans ce dernier cas, le papier doublement métallisé ne joue pas le rôle de diélectrique.

Les bobinages de ces condensateurs sont avantageusement imprégnés par un fluide isolant. L'imprégnation se fait typiquement après que les matériaux solides aient été bobinés, par introduction sous pression réduite d'un fluide isolant, qui est au moment de l'imprégnation sous forme d'un liquide de faible viscosité. L'imprégnation terminée, les condensateurs peuvent subir un traitement thermique. Ce dernier est nécessaire lorsque le fluide isolant est constitué par des systèmes à 2 composants polycondensables et/ou réticulables plus ou moins chargés par un liquide inerte afin de minimiser le retrait.

La demanderesse a observé que, lorsque l'on effectuait l'imprégnation des films de polymère métallisés des bobinages pour condensateurs auto-régénérateurs avec certains liquides aromatiques tels que les mélanges de mono- et dibenzyltoluène, les phénylxylyléthanes, lesdits condensateurs avaient une durée de vie très courte sous tension.

On a maintenant trouvé que l'on pouvait utiliser, pour l'imprégnation des films de polymère métallisés des bobinages pour condensateurs auto-régénérateurs, au moins un fluide isolant choisi dans le groupe constitué par des esters aliphatiques, des alkylbenzènes, des compositions réticulables comprenant au moins un polyol polydiènique, au moins un polyisocyanate et au moins une charge liquide chimiquement inerte.

S'agissant des esters aliphatiques, les composés utilisés dans la présente invention sont de préférence le dioctylsébaçate, le dioctyladipate, le dibutylsébaçate, le diéthylsuccinate.

Parmi ces composés, on préfère tout particulièrement le dibutylsébaçate.

S'agissant des compositions réticulables utilisables selon la présente invention, on préfère utiliser celles qui comprennent au moins un polyol polydiénique, au moins un polyisocyanate de fonctionnalité supérieure à 2 et une quantité pondérale de charge liquide inerte au moins égale à 80 % de la composition de façon à conserver une viscosité inférieure à 100 mPa.s pendant la durée de l'imprégnation.

La charge liquide chimiquement inerte est un liquide isolant, pouvant solubiliser totalement les polyols polydiéniques et les polyisocyanates, choisi parmi les aklylbenzènes tels que les décylbenzènes, les dodécylbenzènes ; les esters diélectriques qui sont par exemple des produits de réaction d'alcools polyvalents tels que le pentaérythritol avec des acides carboxyliques monovalents tels que l'acide n-heptanoïque ; les esters aliphatiques tels que le dioctylsébaçate, le dioctyladipate, le dibutylsébaçate ; les phtalates d'alkyle tels que le dibutylphtalate, le dioctylphtalate ; les composés alkylpolyaromatiques comme le monoisopropylbiphényle (MIPB) ; les huiles végétales telles que les huiles de colza, les huiles de maïs et les huiles de soja, ainsi que la combinaison d'au moins deux des liquides isolants précédemment mentionnés.

De préférence, on utilisera comme charge liquide chimiquement inerte, des esters aliphatiques tels que le dibutylsébaçate et le dioctyladipate, des phtalates d'alkyle tel que le dioctylphtalate ou des huiles végétales tel que l'huile de colza.

Le polyisocyanate utilisé pour réaliser la composition réticulable utilisable selon la présente invention peut être choisi parmi les polyisocyanates aromatiques, aliphatiques, cycloaliphatiques et ceux qui contiennent dans leur molécule un cycle isocyanurate, ayant au moins deux fonctions isocyanate dans leur molécule, susceptibles de réagir avec des fonctions hydroxyle d'un polyol pour former un réseau polyuréthane tri-dimensionnel provoquant une gélification de la composition.

A titre d'illustration de polyisocyanates aromatiques, on citera le 4,4'-diphénylméthane diisocyanate (MDI), les MDI polymériques, le triphényl-méthane triisocyanate.

A titre d'illustration de polyisocyanate aliphatique, on citera le biuret du diisocyanato-1,6 hexane :

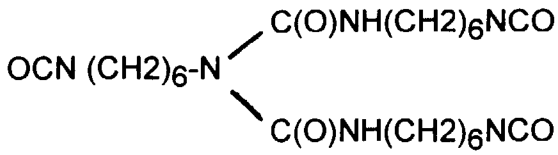

A titre d'illustration de polyisocyanates cycloaliphatiques, on citera l'isophorone diisocyanate (IPDI), le cyclohexyldiisocyanate (CHDI), le 4,4'-dicyclo-hexylméthane diisocyanate.

A titre d'illustration de polyisocyanates qui contiennent dans leur molécule le cycle isocyanurate, on citera les trimères de l'hexaméthylène diisocyanate commercialisés par la Société Rhône-Poulenc sous la dénomination TOLONATE HDT, le tris [1-(isocyanatométhyl)-1,3,3-triméthylcyclohexane] isocyanurate commercialisé par la Société HULS sous la dénomination VESTANAT T 1890/100.

La quantité de polyisocyanate est choisie d'une façon telle que le rapport molaire NCO/OH est voisin de 1 et, de préférence compris entre 0,85 et 1,15.

Le polyol polydiénique est un oligomère de diène conjugué hydroxytéléchélique qui peut être obtenu par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2[méthyl-2, N-(hydroxy-2éthyl)propionamide] ou la polymérisation anionique de diène conjugué ayant de 4 à 20 atomes de carbone en présence d'un catalyseur tel que la naphtalène dilithium.

Selon la présente invention, le diène conjugué du polyol polydiénique est choisi dans le groupe comprenant le butadiène, l'isoprène, le chloroprène, le 1,3- pentadiène et le cyclopentadiène.

On peut utiliser également des oligomères hydroxytélécheliques de diènes conjugués époxydés sur la chaîne ainsi que des oligomères hydrogénés hydroxytélécheliques de diènes conjugués.

Les polyols polydiéniques peuvent avoir des masses molaires en nombre au plus égale à 7000 et de préférence comprises entre 1000 et 3000. Ils présentent des fonctionnalités allant de 1,8 à 3 et une viscosité dynamique mesurée à 30°C au moins égale à 600 mPa.s.

A titre d'illustration de polyols polydiéniques, on citera les polybutadiènes hydroxylés commercialisés par la Société ELF ATOCHEM S.A. sous les dénominations PolyBd® 45 HT et PolyBd® 20 LM.

La composition réticulable peut comprendre en plus du polyol polydiénique un ou plusieurs polyols de faible masse molaire.

Par polyols de faible masse molaire, on entend des polyols ayant des masses molaires allant de 50 à 800.

A titre d'illustration de tels polyols, on peut citer l'éthylène glycol, le propylène glycol, le diéthylène glycol, le dipropylène glycol, les polyétherpolyols, le butane diol-1,4, l'hexane diol-1,6, l'éthyl-2 hexane diol-1,3, le N,N bis(hydroxy-2 propyl)aniline, le méthyl-3 pentanediol-1,5, le triméthylol propane, le pentaérythritol, le bis phénol A propoxylé commercialisé par la Société AKZO sous la dénomination DIANOL 320 et le mélange d'au moins deux polyols précités.

Dans l'éventualité où l'on utilise un polyol de faible masse molaire, le rapport molaire NCO/OH devra être calculé en tenant compte des fonctions hydroxyles apportées par ledit polyol de faible masse molaire.

Bien que l'emploi d'un catalyseur ne soit pas indispensable, on pourra, dans certains cas, si on le désire, utiliser un catalyseur du type organométallique tel que le dibutyldilaurate d'étain, le dibutylacétate d'étain, ou les dérivés organiques du bismuth.

La composition réticulable utilisable selon la présente invention peut être réalisée par mélange, à température ambiante (environ 20°C) des divers constituants par tous moyens d'agitation suffisant pour assurer une bonne dispersion des constituants. La composition réticulable peut également contenir un ou plusieurs additifs tels que anti-oxydants, époxyde, anthraquinone.

La charge inerte peut éventuellement subir un traitement diélectrique sur terre adsorbante.

Les bobinages imprégnés au moyen des fluides isolants selon la présente invention présentent l'avantage de supporter des gradients de tension élevés.

Dans le cas des compositions réticulables, les condensateurs obtenus présentent en outre l'avantage de ne plus avoir de liquide libre susceptible de contaminer l'environnement en cas de fuite.

De plus, cette absence de liquide libre confère aux condensateurs des propriétés de résistance au feu améliorée du fait qu'il ne peut y avoir de projections de liquide enflammé en cas d'explosion du condensateur.

Les exemples qui suivent illustrent l'invention :

I. Condensateurs à film métallisé

➢ **Données concernant les condensateurs**

Les bobinages sont fabriqués avec un film de polypropylène rugueux métallisé sous vide avec un alliage aluminium/zinc, commercialisé par la Société BOLLORE sous la dénomination PP3M.

Le film a une épaisseur (pondérale) de 7,6 µm.

Les bobinages ronds sont "schoopés" au zinc pour permettre les connections.

Les bobinages sont placés en boîtiers cylindriques sertis.

➢ **Préparation des condensateurs**

Avant imprégnation, les condensateurs subissent un traitement de 4 heures à 115°C, puis après retour à température ambiante, un traitement électrique pour éliminer, sur le bobinage avant imprégnation, les principaux points faibles du film métallisé. Ce traitement est fait pas décharge rapide dans chaque bobinage d'un condensateur de 30 µF, préalablement chargé sous 150 V/dc.

➢ **Fluides isolants utilisés :**

- Dibutylsébaçate (ci-après désigné par DBS) présentant une viscosité à 20°C égale à 3,9 mPa.s
- Dioctylsébaçate (ci-après désigné par DOS) présentant une viscosité à 20°C égale à 22,4 mPa.s.
- Dioctyladipate (ci-après désigné par DOA) présentant une viscosité à 20°C égale à 14,1 mPa.s
- Jarylec C100 (ci-après désigné par JARYLEC) constitué de 75 % en poids de benzyltoluènes et de 25 % en poids de (benzyl)benzyltoluènes présentant une viscosité à 20°C de 6,5 mPa.s.

➢ **Les compositions réticulables ont été préparées en utilisant les constituants suivants :**

- PolyBd® 45 HT (ci-après désigné par PolyBd) : polybutadiène hydroxylé de $\overline{Mn}$ égal à 2800 (déterminée par chromatographie d'exclusion stérique), présentant un indice d'hydroxyle $I_{OH}$ exprimé en milliéquivalent par gramme (meq/g) égal à 0,83, une viscosité égale à 5000 mPa.s à 30°C et une densité égale à 0,90,
- Tolonate HDT/LV (ci-après désigné par Tolonate) : tris(6-isocyanatohexyl) isocyanurate, présentant une teneur en NCO égale à 23 %, une fonctionnalité d'environ 3,4 et une viscosité à 25° C égale à 1200 (±300) mPa.s,
- Huile de colza de qualité alimentaire présentant une viscosité à 20° C égale à 69,5 mPa.s.
- DBS,
- JARYLEC,

➢ **Préparation des compositions réticulables :**

- Compositions réticulables comprenant de l'huile de colza comme charge inerte

On traite préalablement l'huile de colza à l'attapulgite. Pour ce faire, on mélange l'huile de colza additionnée de 3 % en poids d'attapulgite à 60°C pendant 4 heures, on filtre sous pression réduite puis on dégaze à 60° C.

On dissout à 60° C le TOLONATE dans l'huile de colza traitée, on ajoute le PolyBd et du DBTL comme catalyseur puis on dégaze sous pression réduite à 60° C.

- Compositions réticulables comprenant du DBS. comme charge inerte.

On dissout à température ambiante, le TOLONATE dans du DBS traité à l'attapulgite selon le protocole précédemment décrit pour l'huile de colza, on porte le mélange à 60°C, on ajoute le PolyBd, le DBTL puis on dégaze sous pression réduite à 60°C.

- Compositions réticulables comprenant du JARYLEC. comme charge inerte (non conformes à l'invention)

On dissout séparément dans du Jarylec, d'une part du PolyBd (mélange A) et d'autre part du Tolonate (mélange B). On ajoute à chacun des mélange A et B, 3 g d'attapulgite pour 100 g de mélange, on agite les mélanges séparément à température ambiante pendant 3 heures, puis on filtre les mélanges sous pression réduite. Ensuite, les mélanges A et B sont mis en contact dans un réacteur en verre muni d'une agitation.

➢ **Imprégnation des condensateurs**

Dans le cas où le fluide isolant est une composition réticulable, cette composition est introduite dans les condensateurs sous pression réduite à 60°C. Ensuite, les condensateurs sont maintenus à 60°C pendant 3 jours puis portés à 90°C et maintenus à cette température pendant 9 jours pour gélifier.

Dans le cas où le fluide isolant est le DBS, le DOS, le DOA ou le JARYLEC, ledit fluide est introduit dans les condensateurs sous pression réduite à température ambiante puis les condensateurs sont portés à 60°C, température que l'on maintient pendant 3 jours puis ensuite, les condensateurs sont portés à 90°C, température que l'on maintient pendant une journée.

➢ **Vieillissement sous tensions continues croissantes.**

Nous avons réalisé des essais sous tension. Pour ces esais, les condensateurs sont soumis à des tensions continues croissantes par paliers de 24 heures.

La température est maintenue à 60°C pendant toute la durée de l'essai. (Pendant les week-ends, la tension est ramenée au niveau du premier palier (1200V = 160 V/µm).

Les durées de vie des condensateurs sont évaluées sous forme de courbes : capacité = f (gradient de tension) qui sont reportés dans les figures 1 à 7. Sur ces figures, nous avons représenté en ordonnée l'évolution de la capacité C exprimée en µF à 60°C et en abscisse le gradient de tension exprimé en V/µm.

Dans le tableau 1 ci-après, nous avons indiqué pour chaque essai :

- la nature du fluide isolant d'imprégnation :
  - liquides tels que Jarylec, DBS, DOA, et DOS ⇒ essais 1 à 8,
  - compositions réticulables ⇒ essais 9 à 14,

    (le pourcentage des constituants des compositions réticulables sont des pourcentages en poids),
- le numéro de la figure et le mode de représentation de la courbe correspondante.

Dans ce tableau NC signifie non-conforme l'invention.

L'essai est poursuivi jusqu'au claquage du condensateur ou arrêté lorsque la baisse de capacité devient trop importante.

| ESSAI | FLUIDE ISOLANT D'IMPREGNATION | | | | | | FIGURE | |
|---|---|---|---|---|---|---|---|---|
| | LIQUIDES | | | | | | N° | COURBE REPRESENTEE PAR : |
| 1 (NC) | JARYLEC | | | | | | 1 | —○— |
| 2 (NC) | JARYLEC | | | | | | 1 | —○— |
| 3 | DBS | | | | | | 2 | —●— |
| 4 | DBS | | | | | | 2 | —○— |
| 5 | DOA | | | | | | 3 | —○— |
| 6 | DOA | | | | | | 3 | —○— |
| 7 | DOS | | | | | | 4 | —○— |
| 8 | DOS | | | | | | 4 | —○— |
| | COMPOSITIONS RETICULABLES | | | | | | | |
| | Jarylec (%) | DBS (%) | Colza (%) | Tolonate (%) | Poly Bd (%) | DBTL (%) | | |
| 9 (NC) | 94 | | | 1 | 5 | | 5 | —○— |
| 10 (NC) | 94 | | | 1 | 5 | | 5 | —○— |
| 11 | | 93,60 | | 0,85 | 5,5 | 5 | 6 | —○— |
| 12 | | 93,60 | | 0,85 | 5,5 | 5 | 6 | —○— |
| 13 | | | 91,5 | 1,2 | 7,3 | 20 | 7 | —○— |
| 14 | | | 91,5 | 1,2 | 7,3 | 20 | 7 | —○— |

TABLEAU 1

II Condensateurs type MKV

➢ **Données sur les condensateurs**

Nous avons utilisé des condensateurs MKV dont le diélectrique solide est un film de polypropylène de 10 µm d'épaisseur et l'armature est un papier métallisé au zinc sur les deux faces. Leur capacité nominale est de 6 µF et ils sont destinés à être installés sous 660 V alternatif.

➢ **Fluide isolant utilisé**

- dioctylphtalate (ci-après désigné par DOP) présentant une viscosité à 20°C égale à 80 mPa.s.

➢ **Les compositions réticulables ont été préparées en utilisant les constituants suivants :**

- DOP,
- dodécylbenzène (ci-après désigné par D9),
- JARYLEC,
- Tolonate,
- PolyBd,
- DBTL,

➢ **Le DOP et les compositions réticulables ont été préparées selon le protocole suivant :**

Préparation du DOP

On agite le DOP avec 3 % en poids d'attapulgite à 60°C pendant 4 heures, on filtre sous pression réduite puis on dégaze sous pression réduite à 60°C.

Compositions réticulables comprenant du DOP comme charge inerte

On dissout séparément dans le DOP, d'une part le PolyBd (mélange A) et d'autre part le Tolonate (mélange B). On ajoute à chacun des mélanges 3 % d'attapulgite et on agite pendant une nuit à 60°C. Puis chaque mélange est filtré et dégazé. Les mélanges sont ensuite mis en contact dans un réacteur en verre agité.

Compositions réticulables comprenant un mélange D9/DOP comme charge inerte

On prépare une solution contenant en poids 80 % de D9 et 20 % de DOP. On dissout séparément dans cette solution, d'une part le PolyBd (mélange A) et d'autre part le Tolonate (mélange B). On ajoute à chacun des mélanges 3 % d'attalpugite et on agite pendant une nuit à 60°C. Puis chaque mélange est filtré et dégazé. Les mélanges sont ensuite mis en contact dans un réacteur en verre agité.

Compositions réticulables comprenant un mélange DOP/JARYLEC comme charge inerte

On prépare une solution contenant en poids 50 % de DOP et 50 % de JARYLEC. On dissout séparément dans cette solution, d'une part le PolyBd (mélange A) et d'autre part le Tolonate (mélange B). On ajoute à chacun des mélanges 3 % d'attapulgite et on agite pendant une nuit à 60°C. Puis chaque mélange est filtré et dégazé. Les mélanges sont ensuite mis en contact dans un réacteur en verre agité.

➢ **Conditions d'imprégnation des condensateurs.**

Dans le cas où le fluide isolant est une composition réticulable, cette composition est introduite dans les condensateurs (préalablement séchés à 100°C sous pression réduite) à 60°C sous pression réduite. Ensuite, les condensateurs sont portés à 90°C, et sont maintenus 10 jours à cette température.

Dans le cas où le fluide isolant est un liquide tel que le DOP, ledit fluide est introduit dans les condensateurs (préalablement séchés à 100°C sous pression réduite) à 60°C sous pression réduite, puis les condensateurs sont portés à 90°C et maintenus 6 jours à cette température.

➢ **Essai de vieillissement sous tension alternative.**

La capacité des condensateurs a été mesurée à 70°C.
Puis les condensateurs ont été soumis à 70°C à un essai de vieillissement sous une tension de 825 V.
Au cours de cet essai, on a mesuré régulièrement la capacité et les pertes de chaque élément.
Après 1077 heures, la tension a été élevée jusqu'à 910 V. L'essai a été arrêté après 203 heures sous cette tension.

Les résultats sont reportés sur la figure 8.

Sur cette figure, nous avons représenté en ordonné la variation de capacité ΔC/C en % et en abscisse le temps en heures.

Dans le tableau 2, ci-après, nous avons indiqué pour chaque essai :

- la nature du fluide isolant d'imprégnation : - DOP ⇨ essai 15
    - compositions réticulables essai 16 à 19 (les pourcentages des constituants des compositions réticulables sont des pourcentages en poids).
- le mode de représentation de la courbe ΔC/C = f(temps) correspondant à chaque essai reportée sur la figure 8,

Dans ce tableau, NC signifie non-conforme à l'invention.

| ESSAI | FLUIDE ISOLANT D'IMPREGNATION | | | | | | FIGURE | |
|---|---|---|---|---|---|---|---|---|
| | LIQUIDES | | | | | | N° | COURBE $\Delta C/C = F(T)$ REPRESENTEE PAR : |
| 15 | DOP | | | | | | 8 | – – + – – |
| | COMPOSITIONS RETICULABLES | | | | | | | |
| | Jarylec (%) | DOP (%) | D9 (%) | Tolonate (%) | Poly Bd (%) | DBTL (%) | | |
| 16 | | 94 | | 0,8 | 5,2 | 3 | 8 | ——●—— |
| 17 | | 92 | | 1,1 | 6,9 | | 8 | ——■—— |
| 18 | | 18,7 | 77,4 | 0,88 | 5,72 | 3 | 8 | —— —— |
| 19 (NC) | 47 | 47 | | 0,8 | 5,2 | 5 | 8 | - - -○- - - |

TABLEAU 2

Les condensateurs imprégnés avec un mélange JARYLEC/DOP -essai 19- ont claqué 5 heures après la mise sous une tension de 910 V.

Aucun claquage n'a été observé pour les autres condensateurs.

III Condensateurs à film métallisé

➢ **Données concernant les condensateurs**

Les bobinages sont fabriqués avec du film polypropylène métallisé aluminium, commercialisé par a Société Bolloré sosu l'appellation PP2. La métallisation "crénelée" de ce film a une résistance superficielle de 2 Ω/□.

Le film a une épaisseur pondérale de 7,4 μm.

Les bobinages aplatis sont schoopés au zinc pour permettre les connections et sont placés, par groupe de deux, en boîtiers parallélépipèdiques.

➢ **Fluides isolants utilisés**

- Jarylec C100 (ci-après désigné par C100),
- Dibutylsébaçate (ci-après désigné par DBS),
- Dodébylbenzène (ci-après désigné par D9),
- Dioctylphtalate (ci-après désigné par DOP).

Ces liquides ont été préalablement traités par agitation avec 3 % d'Attapulgite activée pendant une nuit à 20°C, puis filtrés et dégazés sous pression réduite.

➢ **Compositions réticulables**

Elles ont été obtenues en ajoutant au liquide isolant le PolyBd et le Tolonate.

➢ **Imprégnation des condensateurs**

Avant imprégnation, les condensateurs subissent un traitement de 48 jeures à 70°C, sous pression réduite, puis sont refroidis jusqu'à la température ambiante (environ 20°C). L'imprégnation est effectuée sous pression réduite. A la fin de l'imprégnation, les condensateurs sont remis à pression atmosphérique et sont laissés à température ambiante pendant environ une semaine. Ils sont ensuite soumis à un traitement thermique à 60°C pendant au moins une semaine.

➢ **Vieillissement des condensateurs sous tension continue**

Nous avons réalisé des essais dans lesquels les condensateurs sont soumis à des tension continues croissantes par paliers de 24 heures (pendant les week ends, la tension est ramenée au niveau du premier palier). La température est maintenue à 55°C pendant toute la durée de l'essai. Celui-ci est arrêté lorsque la chute de capacité devient trop importante. La capacité des bobinages est mesurée à la fin de chaque palier. Les durées de vie des condensateurs sont évaluées sous la forme de courbes : capacité = f(gradient de tension) qui sont reportées dans les figures 9 à 11 ci-après. Sur ces figures, nous avons représenté en abscisse le gradient de tension exprimé en V/μm, et en ordonnée la variation de la capacité ΔC/C exprimée en %.

Dans le tableau 3, nous avons indiqué pour chaque essai :

- la nature de l'imprégnant,
- le numéro de la figure,
- le mode de représentation de la courbe correspondante.

Dans ce tableau NC signifie non-conforme à l'invention.

| ESSAI | IMPREGNANTS | FIGURES | |
|---|---|---|---|
| | **LIQUIDES** | **N°** | **REPRESENTATION** |
| **20 (NC)** | C 100 | 9 | — O — |
| | COMPOSITIONS RETICULABLES | N° | REPRESENTATION |

(suite)

| ESSAI | IMPREGNANTS | | | | | | FIGURES | |
|---|---|---|---|---|---|---|---|---|
| | LIQUIDES | | | | | | N° | REPRESENTATION |
| | DBS (%) | DOP (%) | D9 (%) | Tolonate (%) | PolyBd | DBTL (ppm) | | |
| **21** | 93,63 | | | 0,85 | 5,52 | 5 | 10 | —□— |
| **22** | | 18,69 | 74,76 | 0,82 | 5,73 | | 11 | —■— |

**Revendications**

**1.** Utilisation d'au moins un fluide isolant pour l'imprégnation des films de polymère métallisés des bobinages pour condensateurs auto-régénérateurs, caractérisée en ce que ledit fluide isolant est choisi dans le goupe constitué par des esters aliphatiques, des alkylbenzènes, des compositions réticulables comprenant au moins un polyol diénique, au moins un polyisocyanate et au moins une charge liquide chimiquement inerte.

**2.** Utilisation selon la revendication 1, caractérisée en ce que les esters aliphatiques sont le dioctylsébaçate, le diocyladipate, le dibutylsébaçate.

**3.** Utilisation selon l'une des revendications 1 ou 2, caractérisée en ce que l'ester aliphatique est le dibutylsébaçate.

**4.** Utilisation selon la revendication 1, caractérisée en ce que les compositions réticulables comprennent au moins un polyolpolydiénique, au moins un polyisocyanate de fonctionnalité supérieure à 2 et une quantité pondérale de charge liquide inerte au moins égale à 80 % de la composition.

**5.** Utilisation selon la revendication 4, caractérisée en ce que le polyolpolydiénique est un oligomère de butadiène hydroxytéléchélique de masse molaire en nombre au plus égale à 7000 et, de préférence comprise entre 1000 et 3000 et en ce que ledit oligomère a une fonctionnalité allant de 1,8 à 3.

**6.** Utilisation selon l'une des revendications 1 ou 4, caractérisée en ce que la charge liquide inerte est choisie parmi les alkylbenzènes, les esters aliphatiques, les phtalates d'alkyle, les huiles végétales.

**7.** Utilisation selon la revendication 6, caractérisée en ce que l'alkylbenzène est le dodécylbenzène.

**8.** Utilisation selon la revendication 6, caractérisée en ce que l'ester aliphatique est le dibutylsébaçate.

**9.** Utilisation selon la revendication 6, caractérisée en ce que le phtalate d'alkyle est le dioctylphtalate.

**10.** Utilisation selon la revendication 6, caractérisée en ce que l'huile végétale est l'huile de colza.

**11.** Utilisation selon l'une des revendications 1 ou 4, caractérisée en ce que le polyisocyanate est choisi parmi les polyisocyanates aromatiques, aliphatiques, cycloaliphatiques et ceux qui contiennent dans leur molécule un cycle isocyanurate, ayant au moins deux fonctions isocyanate.

**12.** Utilisation selon la revendication 11, caractérisée en ce que le polyisocyanate est le tris-(6-isocyanatohexyl)iso-cyanurate.

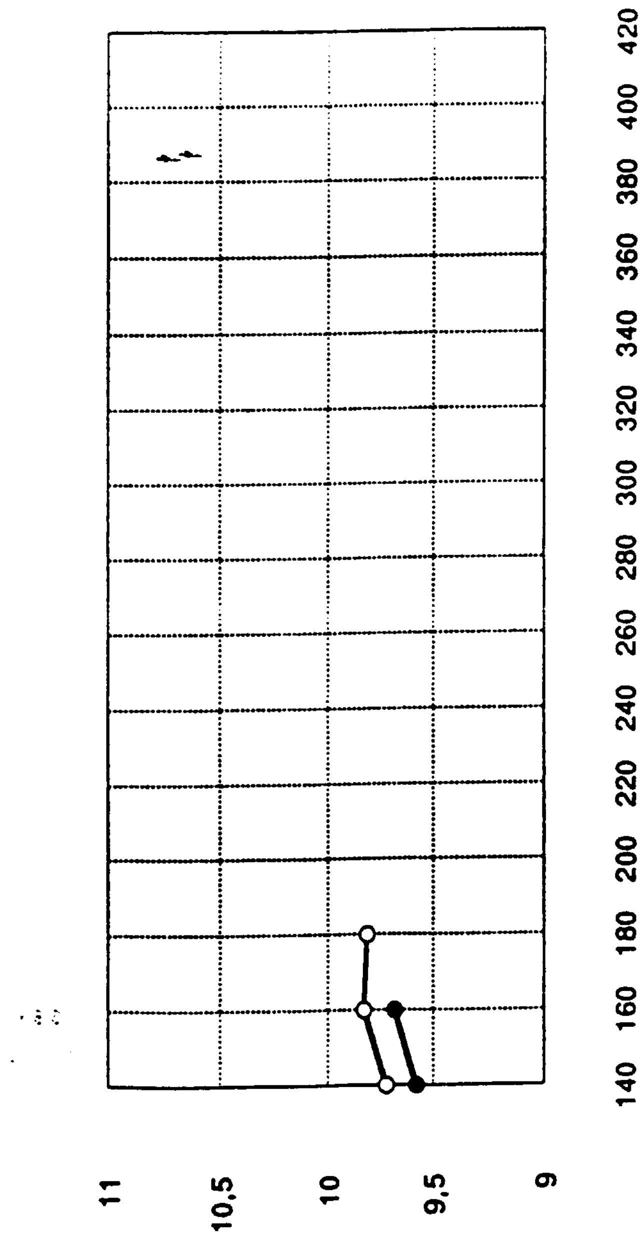
140
160
180
200
220
240
260
280
300
320
340
360
380
400
420
11
10,5
10
9,5
9

FIGURE 1

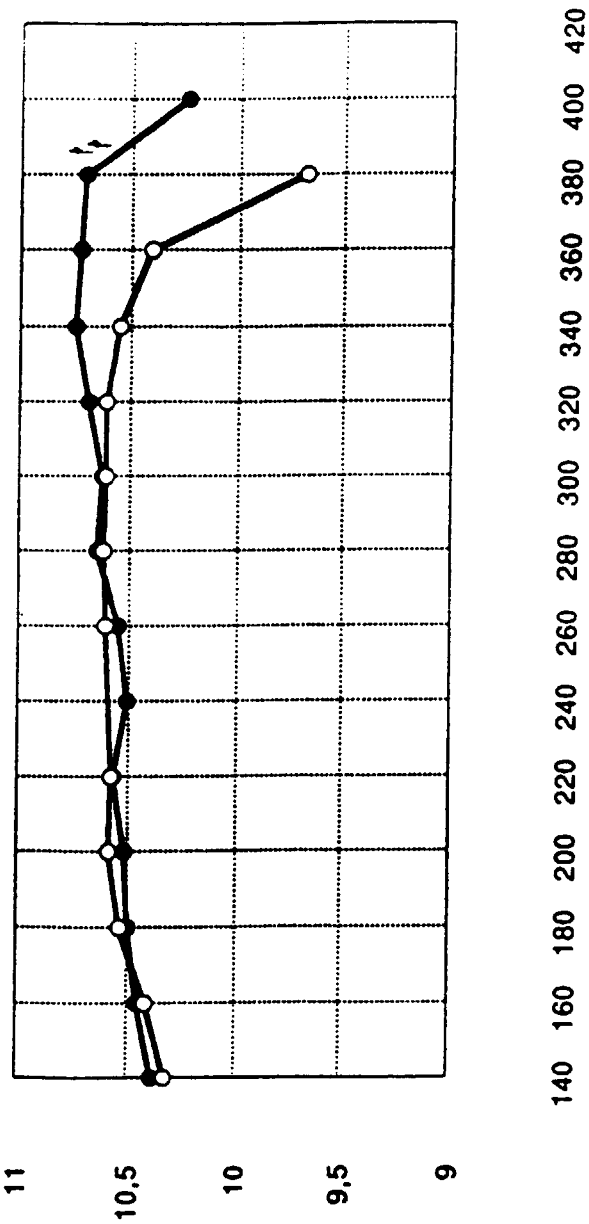
11
10,5
10
9,5
9
140
160
180
200
220
240
260
280
300
320
340
360
380
400
420

FIGURE 2

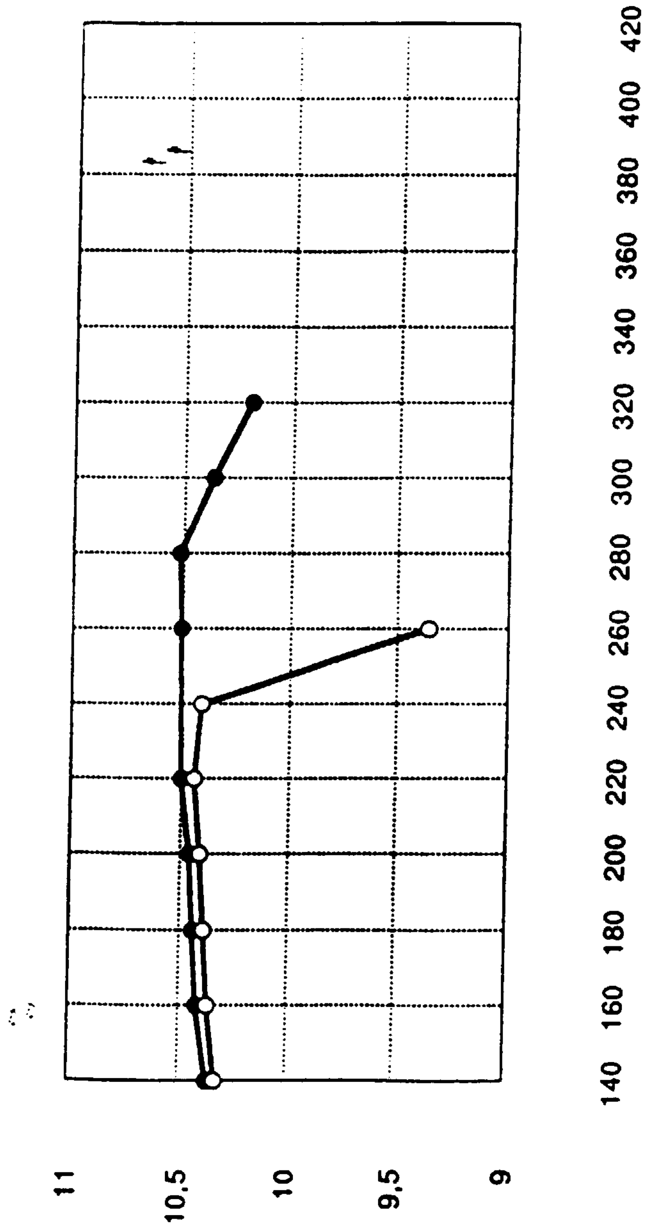
140
160
180
200
220
240
260
280
300
320
340
360
380
400
420
11
10,5
10
9,5
9

FIGURE 3

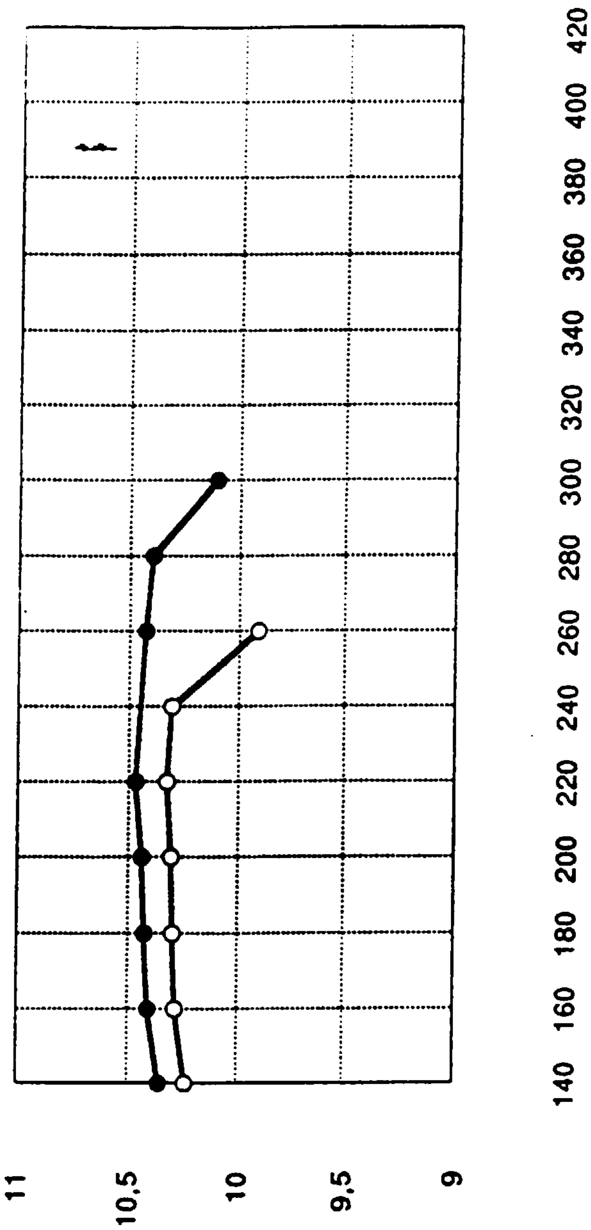

420
400
380
360
340
320
300
280
260
240
220
200
180
160
140
11
10,5
10
9,5
9


FIGURE 4

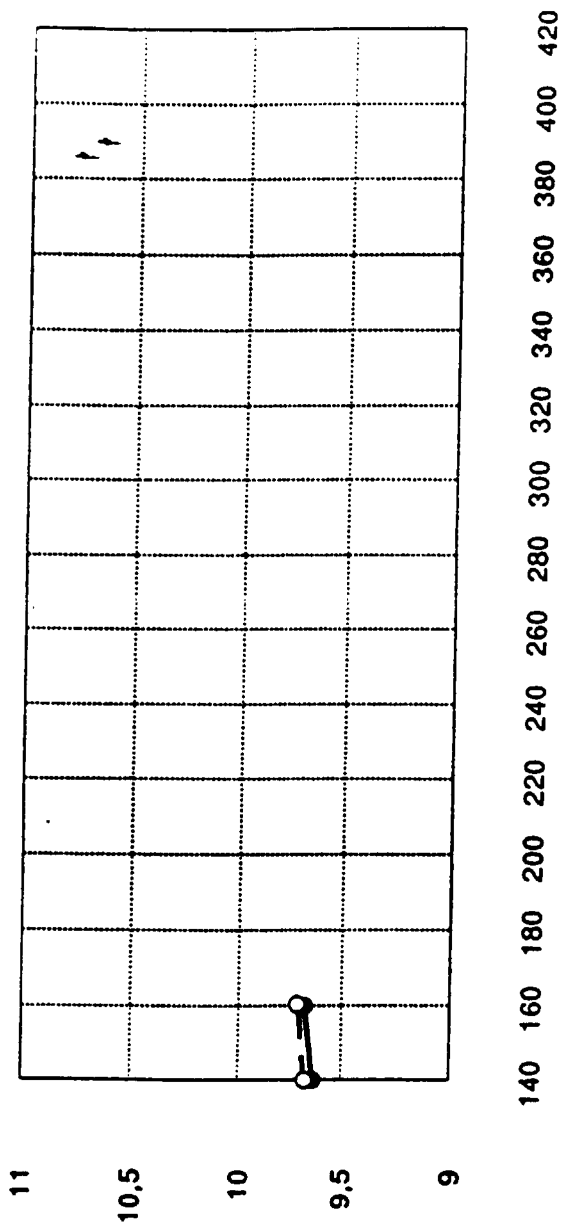
140
160
180
200
220
240
260
280
300
320
340
360
380
400
420
11
10,5
10
9,5
9

FIGURE 5

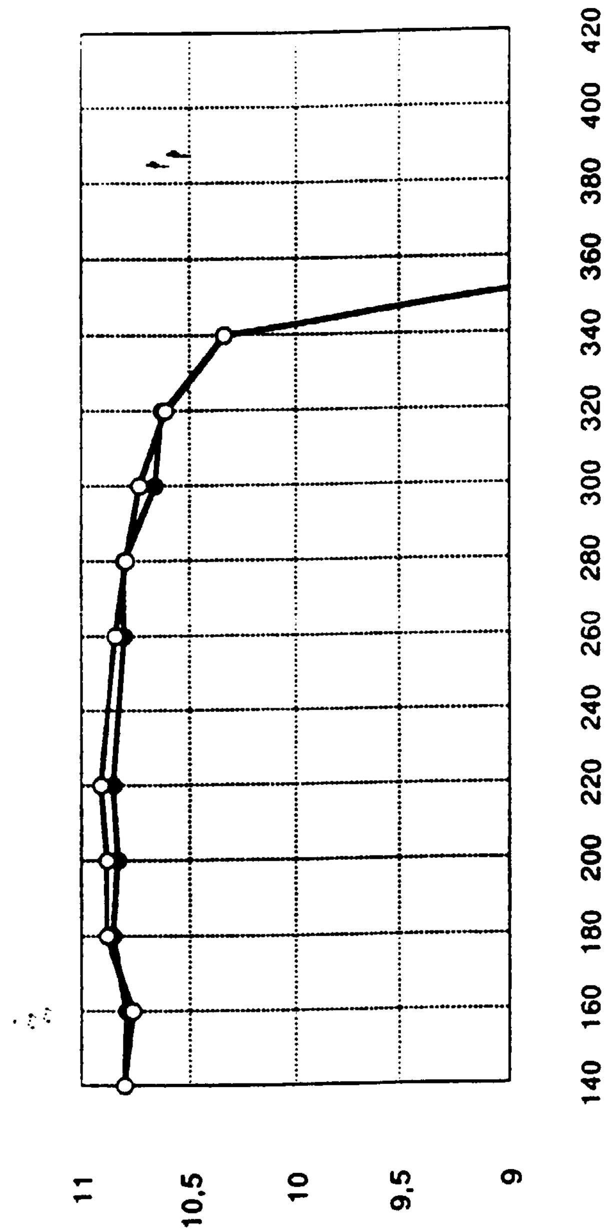
140
160
180
200
220
240
260
280
300
320
340
360
380
400
420
11
10,5
10
9,5
9

FIGURE 6

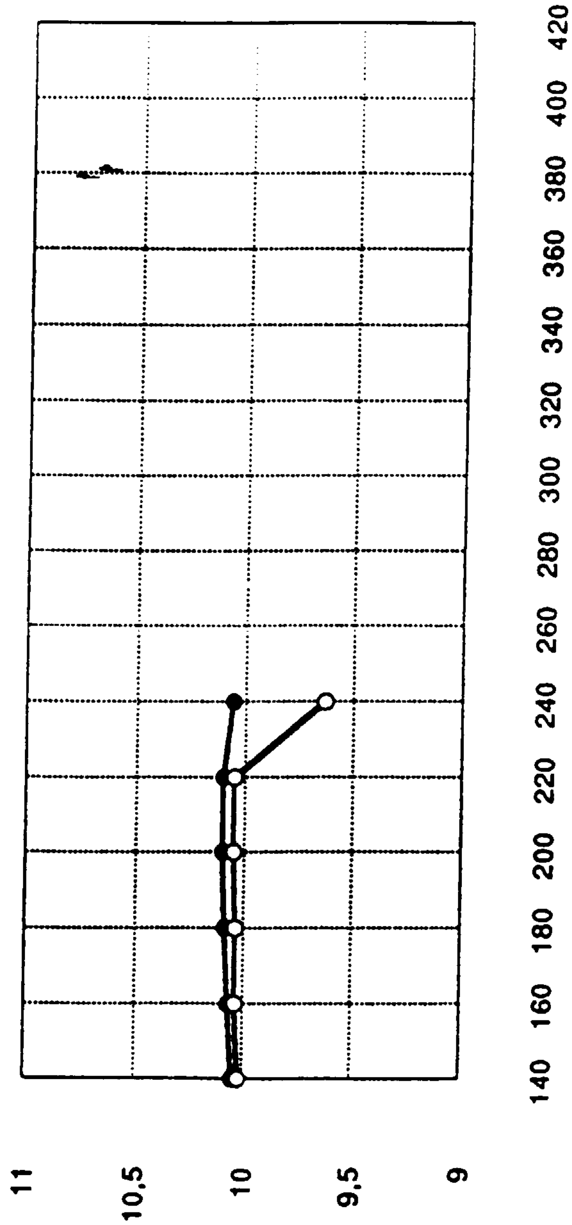
140
160
180
200
220
240
260
280
300
320
340
360
380
400
420
11
10,5
10
9,5
9

FIGURE 7

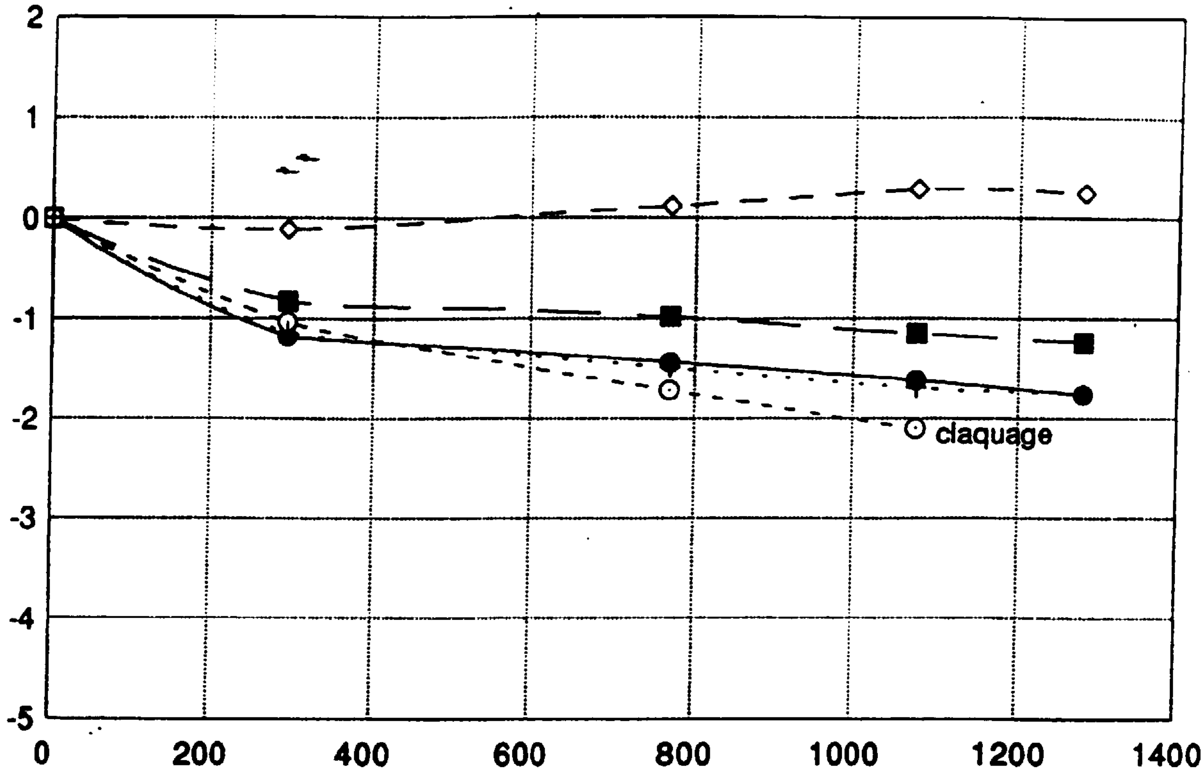


FIGURE 8

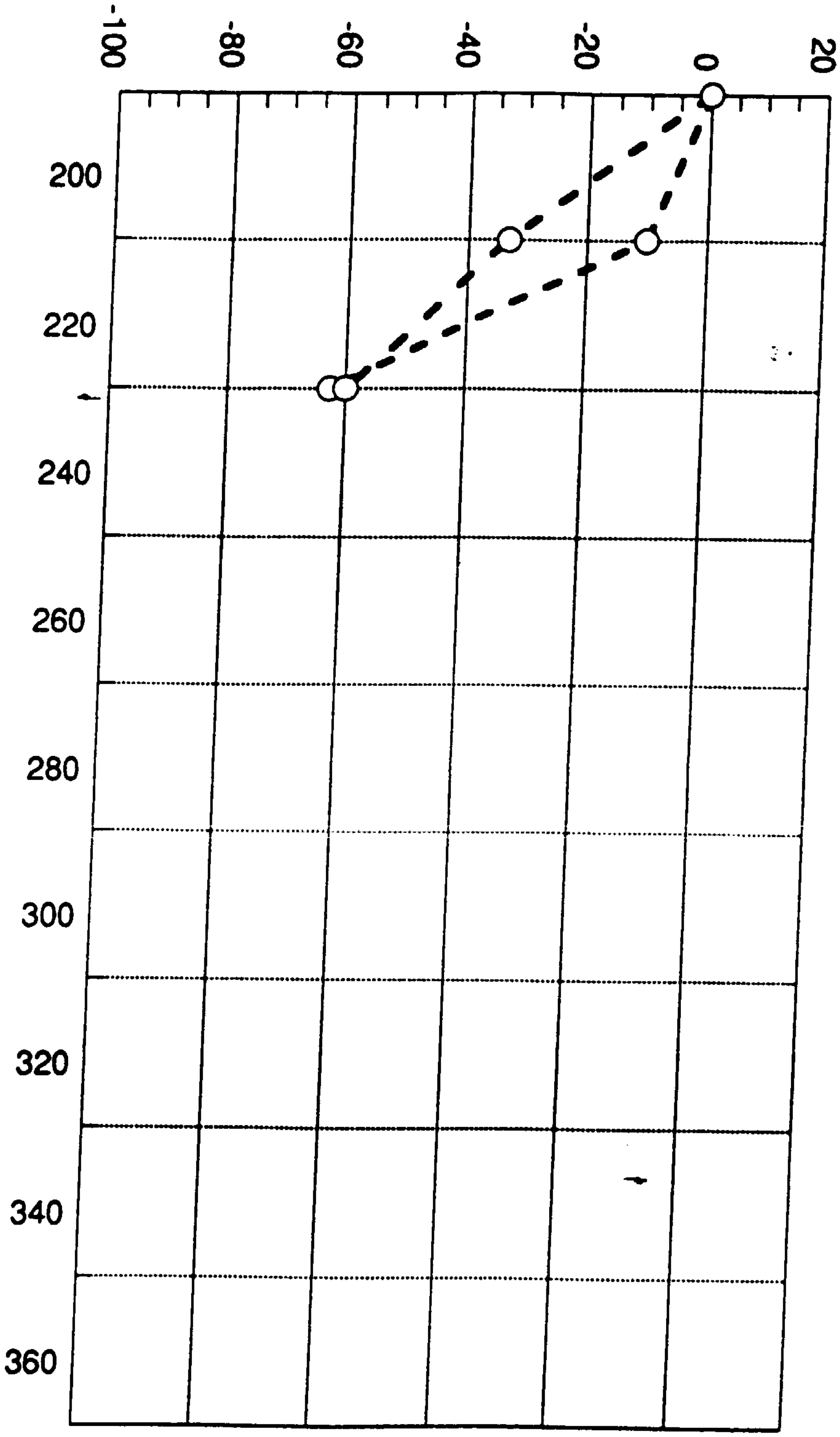


FIGURE 9

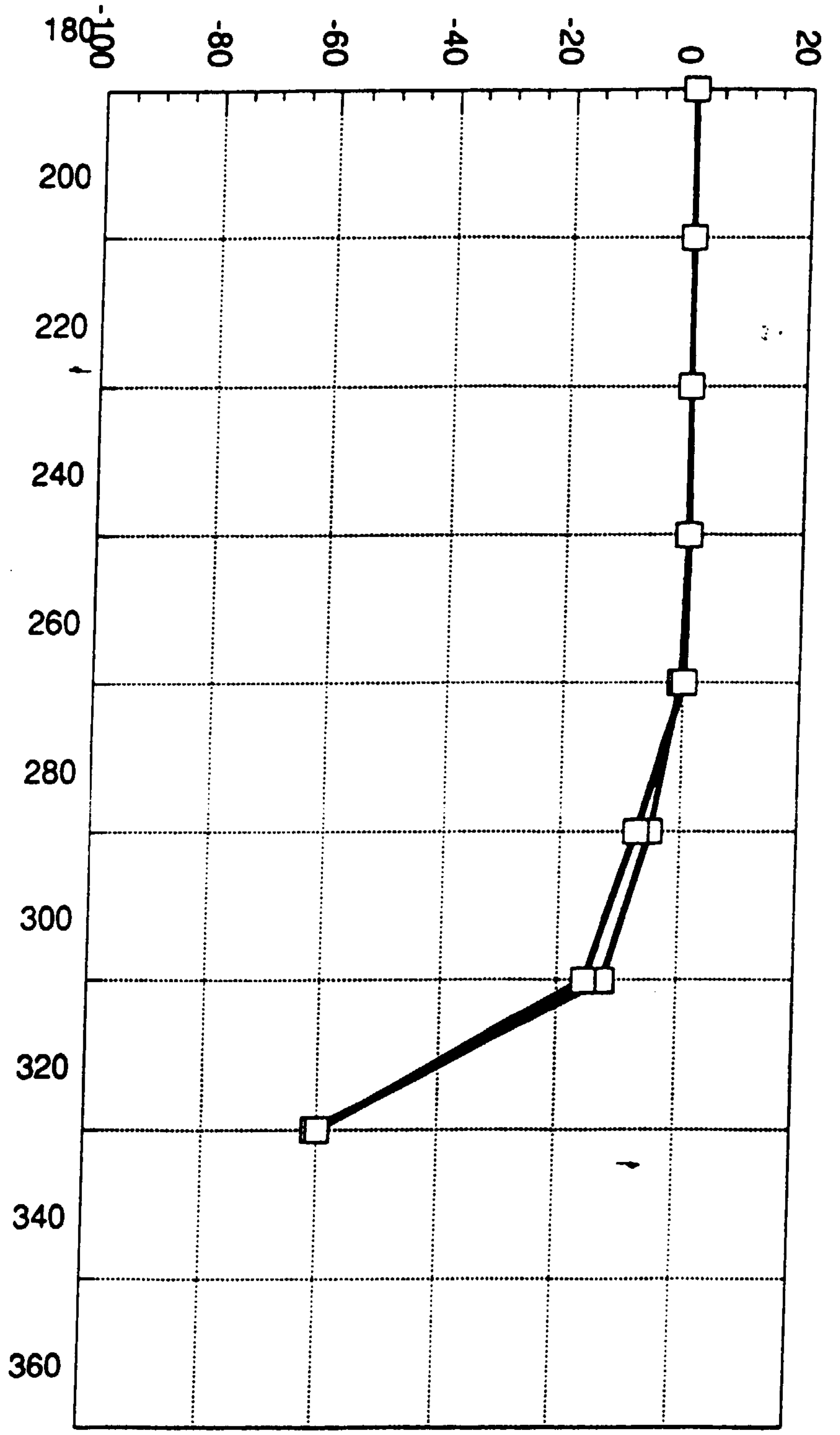


FIGURE 10

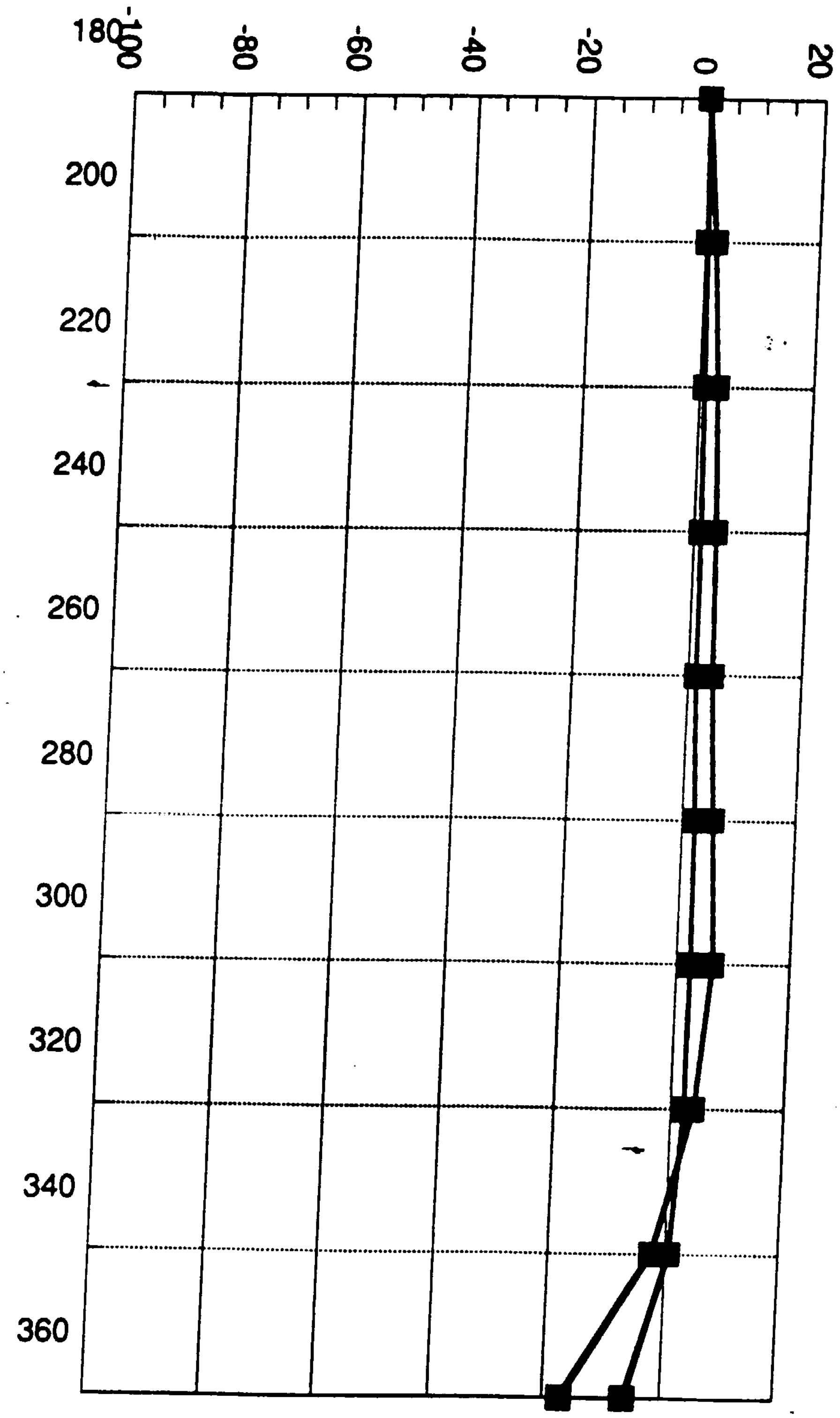


FIGURE 11

Office européen des brevets

# RAPPORT DE RECHERCHE EUROPEENNE

Numero de la demande
EP 97 40 1343

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 4 317 159 A (ANDREW DEQUASIE)<br>* colonne 2, ligne 9 - ligne 25 *<br>* colonne 2, ligne 38 - ligne 40 *<br>* revendications 1-4 * | 1,2 | H01G4/22 |
| A | | 4,6,9,11 | |
| | --- | | |
| X | US 3 925 221 A (JOHN W. EUSTANCE)<br>* colonne 1, ligne 10 - ligne 13 *<br>* colonne 3, ligne 11 - ligne 20 *<br>* colonne 13, ligne 54 - ligne 56 * | 1-3 | |
| A | | 4,6,9 | |
| | --- | | |
| A | US 4 060 583 A (JAMES D. GROVES ET AL.)<br>----- | | |
| | | | **DOMAINES TECHNIQUES RECHERCHES (Int.Cl.6)** |
| | | | H01G |

Le présent rapport a été établi pour toutes les revendications

| Lieu de la recherche | Date d'achèvement de la recherche | Examinateur |
|---|---|---|
| LA HAYE | 21 Juillet 1997 | Goossens, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)